# EUROPEAN PATENT SPECIFICATION

(11) **EP 3 978 089 B1**
(45) Date of publication and mention of the grant of the patent: **23.04.2025**
(21) Application number: 20853764.7
(22) Date of filing: 16.07.2020
(51) Int. Cl.: A63F 13/52, A63F 13/216, A63F 13/577

(54) **INTERACTIVE METHOD AND SYSTEM BASED ON AUGMENTED REALITY DEVICE, ELECTRONIC DEVICE, AND COMPUTER READABLE MEDIUM**
INTERAKTIVES VERFAHREN UND SYSTEM BASIEREND AUF EINER VORRICHTUNG MIT ERWEITERTER REALITÄT, ELEKTRONISCHE VORRICHTUNG UND COMPUTERLESBARES MEDIUM
PROCÉDÉ ET SYSTÈME INTERACTIFS BASÉS SUR UN DISPOSITIF DE RÉALITÉ AUGMENTÉE, DISPOSITIF ÉLECTRONIQUE ET SUPPORT LISIBLE PAR ORDINATEUR

(30) Priority: 19.08.2019 CN 201910765900
(43) Date of publication of application: 06.04.2022
(73) Proprietor: GUANGDONG OPPO MOBILE TELECOMMUNICATIONS CORP., LTD., Wusha, Chang'an Dongguan Guangdong 523860 (CN)
(72) Inventor: LIU, Mujun, Dongguan, Guangdong 523860 (CN)
(74) Representative: Taor, Simon Edward William
(86) International application number: PCT/CN2020/102478
(87) International publication number: WO 2021/031755

(56) References cited:
- CN-A- 106 020 493
- CN-A- 108 415 570
- CN-A- 108 499 103
- CN-A- 108 499 103
- US-A- 6 166 744
- US-A1- 2014 240 464
- US-A1- 2018 349 700
- BENJAMIN GOTOW J ET AL: "Addressing Challenges with Augmented Reality Applications on Smartphones", vol. 48, 1 January 2010 (2010-01-01), pages 129 - 143, XP008144123, ISBN: 978-3-642-17758-3, Retrieved from the Internet <URL:https://springerlink3.metapress.com/content/nvl6527027407256/resource-secured/?t arget=fulltext.pdf&sid=i3hlhak3cavekhmkbahoe1yj&sh=www.springerlink.com> [retrieved on 20101130], DOI: 10.1007/978-3-642-17758-3_10

## Description

### CROSS-REFERENCE TO RELATED APPLICATIONS

This application claims priority to Chinese patent application No. 201910765900.8, filed before China National Intellectual Property Administration on August 19, 2019, with the title "INTERACTIVE METHOD AND SYSTEM BASED ON AUGMENTED REALITY DEVICE".

### FIELD

The embodiments of the present disclosure relate to the field of the augmented reality (AR) technology, and specifically, to an interactive method based on an augmented reality device, an interactive system based on an augmented reality device, an electronic device, and a computer-readable medium. US 2018/349700 A1 describes augmented reality (AR) systems and devices, which provide users with enhanced human sensorial perceptions using digital content. Benjamin Gotow J *et al.* discloses an interactive method based on an augmented reality device. US 2014/240464 A1 describes the control of depth sensors for machine vision

### BACKGROUND

In related role-playing augmented reality games, a virtual game scene can be superimposed on a real scene picture, allowing an interaction between the virtual game scene and the real scene. However, when playing the game, due to inaccurate positioning of a user, an augmented reality game scene may fail to be loaded accurately, and the user cannot accurately interact with a virtual object, thereby leading to poor user experience.

### SUMMARY

The invention is defined by the appended set of claims, which provide for an interactive method based on an augmented reality device according to claim 1, and an interactive system according to claim 7. The dependent claims define preferred embodiments.

These or other aspects of the present disclosure will be more concise and understandable in the description of the following embodiments.

### BRIEF DESCRIPTION OF DRAWINGS

FIG. 1 illustrates a schematic diagram of an interactive method based on an augmented reality device according to an embodiment of the present disclosure.
FIG. 2 illustrates a schematic diagram of a positional relation between a virtual scene and an augmented reality device according to an embodiment of the present disclosure.
FIG. 3 illustrates a schematic diagram of a relation between a coordinate system of a target scene and a coordinate system of a real environment according to an embodiment of the present disclosure.
FIG. 4 illustrates a schematic diagram of a position interaction between an augmented reality device and a virtual interactive object in a coordinate system of a target scene according to an embodiment of the present disclosure.
FIG. 5 illustrates a schematic block diagram of an interactive system based on an augmented reality device according to an embodiment of the present disclosure.
FIG. 6 illustrates a schematic block diagram of a computer system of an electronic device according to an embodiment of the present disclosure.

### DESCRIPTION OF EMBODIMENTS

Technical solutions in embodiments of the present disclosure will be clearly described in detail in conjunction with the drawings in the embodiments of the present disclosure.

It should be understood that the technical solutions of the embodiments of the present disclosure can be applied to various augmented reality devices, such as AR glasses and AR helmets; or, they can also be applied to smart terminal devices, such as mobile phones, tablet computers, equipped with a rear camera.

In the related role-playing games, a user generally uses a display to watch the game picture. Alternatively, for virtual reality games, the user can watch a virtual picture in an immersive manner by using a helmet. However, the above-mentioned games can only be implemented in fixed locations, and cannot be combined with realistic scenes or objects. At present, more and more augmented reality games emerge. The augmented reality games are characterized in that a game scene (i.e., a virtual scene) is superimposed on a real scene picture, allowing an interaction between the game scene and the real scene.

However, in the related augmented reality games, due to the inaccurate positioning of the user, the augmented reality game scene may fail to be loaded accurately. In addition, after entering the game scene, when the user interacts with the virtual object in the augmented reality game scene, the user may be unable to accurately interact with the virtual object due to the inaccurate positioning of the user, thereby resulting in poor user experience. In this regard, it is necessary to provide a method, which can improve the accuracy of the positioning of the augmented reality device.

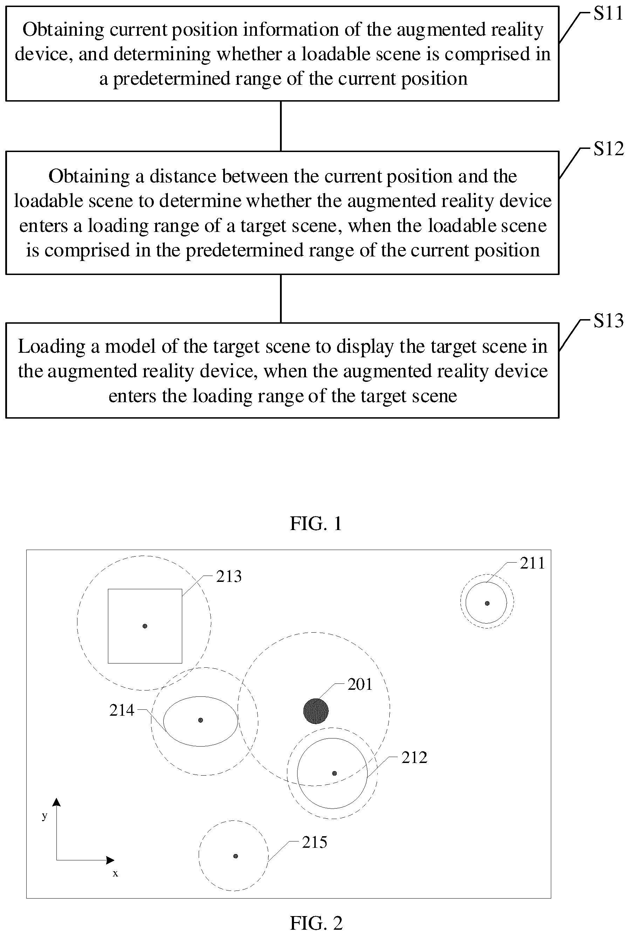

FIG. 1 illustrates a schematic diagram of an interactive method based on an augmented reality device according to an embodiment of the present disclosure. As illustrated in FIG. 1, the interactive method includes some or all of the following content.

At S 11, current position information of the augmented reality device is obtained, and it is determined whether a loadable scene is included in a predetermined range of the current position.

At S12, when the loadable scene is included in the predetermined range of the current position, a distance between the current position and the loadable scene is obtained to determine whether the augmented reality device enters a loading range of a target scene.

At S13, when the augmented reality device enters the loading range of the target scene, a model of the target scene is loaded to display the target scene in the augmented reality device.

Specifically, the aforementioned augmented reality device may be a smart terminal device such as a pair of AR glasses and an AR helmet. Taking the AR glasses as an example, a binocular or monocular perspective optical engine can be provided on a frame of the glasses. Through the perspective optical engine, dynamic data, such as videos, charts, instruction information, control information, etc., can be displayed to the user without affecting observation of surrounding environment. In addition, the AR glasses may be equipped with a camera component, which may include a high-definition camera, and a depth camera, etc. At the same time, the AR glasses may be equipped with a sensor. The sensor may be, for example, gyroscope, acceleration sensor, magnetometer, and optical sensor. Alternatively, the sensor may be a nine-axis sensor, such as a combination of a three-axis gyroscope, a three-axis accelerometer, and a three-axis magnetometer, or a combination of a six-axis accelerometer and a three-axis gyroscope, or a combination of a six-axis gyroscope and a three-axis accelerometer. In addition, the AR glasses may further be equipped with a GPS component, a Bluetooth component, a power supply component and an input device. The AR glasses may be connected to a controller, on which the aforementioned GPS component, the Bluetooth component, a WiFi component, the power supply component and the input device, a processor, a memory and other modules or units can be assembled. In addition, a data interface may be provided in a body of the AR glasses or on the controller to facilitate data transmission and connection with an external device. The specific structure and form of the AR glasses are not specifically limited in the present disclosure.

Alternatively, the augmented reality device may be a smart terminal device, for example, a mobile phone or a tablet computer equipped with a rear camera, a sensor component, and an augmented reality application. For example, after installing an augmented reality application in a mobile phone, the screen of the mobile phone can be used as a display configured to display a real environment and a virtual control, and so on. In the following embodiments, the augmented reality device is explained by adopting the AR glasses as an example.

Optionally, in the embodiments of the present disclosure, the above-mentioned loadable scene may be a game virtual scene containing different contents. Respective virtual scenes may include boundaries of different shapes and display ranges, and a corresponding coordinate range may be pre-configured based on the display range of each virtual scene. For example, in an augmented reality game, the current position information can be obtained using the GPS component mounted in the AR glasses. Further, it can be determined whether the loadable virtual scene exists near the current position in a map. For example, referring to FIG. 2, in the current scene, a loadable virtual scene 211, virtual scene 212, virtual scene 213, virtual scene 214, and virtual scene 215 exist near the user 201 in the current game map. Alternatively, a circle is defined by taking the current position of the user 201 as a center and a predetermined distance as a radius, and it is determined whether the loadable scene exists within the range of the circle. For example, as illustrated in FIG. 2, the virtual scene 212 and the virtual scene 214 are located in the predetermined range of the current position of the user 201, and the virtual scene 212 and the virtual scene 214 are the loadable scenes.

In order to improve user experience and enhance immersive experience of the game, a loading range of each virtual scene can be predetermined. As an example, the corresponding loading range of each virtual scene can be configured based on an actual location in the real scene of the virtual scene and surrounding environment. For example, if the virtual scene is to be displayed on a relatively empty square without obstacles obstructing the sight, it is necessary to load the virtual scene when the user can see it with his/her normal vision, and in this case, the virtual scene can be provided with a relatively large loading range. If the virtual scene is to be displayed indoors or in a relatively small space, for example, at a position under a tree or around a corner of a wall, the virtual scene can be provided with a relatively small loading range. When a current visual field of the augmented reality device faces the scene, a corresponding target virtual scene is loaded, so that the user's viewing experience is closer to reality, and it is avoided that the corresponding target scene is once displayed when the user has entered an effective range of the target scene. In addition, for the virtual scene, the loading range and a display range may be different coordinate ranges. For example, referring to FIG. 2, the loading ranges of the virtual scene 211, the virtual scene 212, the virtual scene 213, and the virtual scene 214 are respectively larger than the actual display ranges thereof. In addition, the loading range of the virtual scene may be the same as the display range of the virtual scene, for example, the virtual scene 215 as illustrated in FIG. 2.

After obtaining the loadable scenes near the current position of the user 201, the distance between the user 201 and each loadable scene can be calculated. For example, a current distance between the current position of the user and coordinates of a center of the loadable scene can be calculated based on coordinate data. If the current distance is smaller than or equal to a radius distance from the coordinates of the center of the loadable scene to the loading range, it is considered that the user enters the loading range of the loadable scene. Otherwise, it is considered that the user does not enter the loading range of the loadable scene.

When it is determined that the augmented reality device enters the loading range of the target scene, the model of the target scene can be loaded, and the target scene can be displayed on the interface of the augmented reality device. The model of each target scene can be stored locally or on a network server. For example, the target scene is displayed in the AR glasses. By pre-loading a map model of the virtual scene when it is determined that the user enters the loading range of the virtual scene, the user's viewing experience and sense of immersion can be effectively improved.

In addition, at the time of loading the model of the target scene to display the target scene in the augmented reality device, a task list corresponding to the target scene may be read to display the task list in the augmented reality device. The task list may include data such as introduction information of the target scene and task information of the target scene.

Optionally, in the embodiments of the present disclosure, when the augmented reality device enters the loading range of the target scene, the above-mentioned method may further include the following steps.

At S 131, a trigger instruction for activating a camera component and a sensor component of the augmented reality device is generated.

At S 132, image data corresponding to a current visual field of the augmented reality device is obtained using the camera component, and motion data of the augmented reality device is obtained using the sensor component.

At S133, position information of the augmented reality device in a coordinate system of the target scene is obtained based on the image data and the motion data.

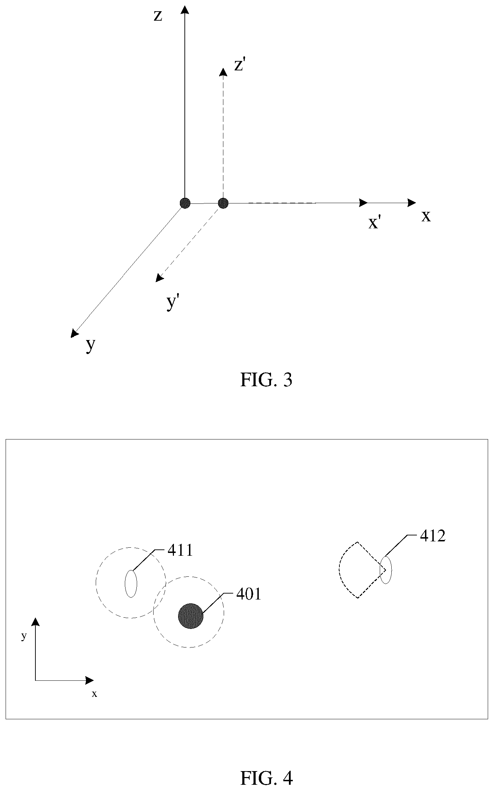

Specifically, the coordinate system of the target scene in the aforementioned augmented reality environment may be established based on the real environment. As illustrated in FIG. 3, the coordinate system of the target scene may adopt the same scale as the real environment. In addition, when the augmented reality device enters the loading range of the target scene and starts to load the model corresponding to the target scene, the trigger instruction can be generated, and in response to the trigger instruction, the augmented reality device can activate the camera component and the sensor component to collect data and obtain the position information of the augmented reality device in the coordinate system of the target scene.

Optionally, in the embodiments of the present disclosure, said obtaining the position information of the augmented reality device in the coordinate system of the target scene based on the image data and the motion data may include the following steps.

At S1331, a depth image is recognized to obtain depth data of a target object, and a distance between the augmented reality device and the target object is obtained based on the depth data.

At S1332, sensor data of the augmented reality device is read, and a motion recognition result of the augmented reality device is obtained based on the sensor data.

At S1333, scene position information of the augmented reality device in the coordinate system of the target scene is determined based on the motion recognition result and the distance between the augmented reality device and the target object.

Specifically, one or more target objects may be pre-configured in each augmented reality scene to be displayed and each target scene. The target object may be an object existing in the real scene, such as a marked telephone pole, a marked street sign, or a marked trash can, etc. Of course, the target object may be a target object with marking information specially configured for each virtual scene. In addition, the coordinates of each target object in the coordinate system of the target scene can be determined in advance.

The camera component that can be assembled in the AR glasses includes at least one depth camera, for example, a Time of flight (ToF) module. The depth camera can be used to capture a depth image corresponding to the real scene in the current visual field of the augmented reality device. In addition, the target object in the depth image is recognized, depth information is obtained, and the distance is used as a distance recognition result. Thus, the distance between the AR glasses and the at least one target object is obtained based on the depth data.

Specifically, if the user wears the AR glasses, after the captured depth image corresponding to the current visual field is recognized, two different target objects A and B are currently recognized and located on the same plane, two circles are drawn in the coordinate system of the target scene by respectively taking A and B as the centers and two recognized distances as the radiuses, then an intersection point between these two circles is the current position of the AR glasses in the coordinate system of the target scene.

Specifically, when scene coordinates of the user in the coordinate system of the target scene are calculated, the sensor data of the augmented reality device can be read, and the motion recognition result of the augmented reality device is obtained based on the sensor data; and more accurate coordinate information of the augmented reality device in the coordinate system of the target scene is determined based on the motion recognition result of the augmented reality device and the distance between the augmented reality device and the target object in the coordinate system of the target scene.

Specifically, angles of the AR glasses (i.e., angles of the sight of the user) in horizontal direction and in vertical direction can be calculated based on data collected by the nine-axis sensor, and thus angles between the AR glasses and a feature-matching object in the horizontal direction and in the vertical direction can be obtained. Therefore, the current coordinates of the user in the coordinate system of the target scene can be more accurately calculated based on the distance between the AR glasses and the target object in the coordinate system of the target scene and the angle information between the AR glasses and the target object in the horizontal direction and in the vertical direction. For example, when the user stands on the ground and looks at the target object hanged in mid-air, his/her line of sight forms angles with respect to the horizontal direction and the vertical direction. The nine-axis sensor can recognize a head-up motion of the user and a specific angle, so that the position of the user can be more accurately determined based on the angle data based on the coordinates of the target object and the recognized distance.

As an alternative embodiment, a plurality of target objects may be provided; and the interactive method may further include: obtaining a plurality of pieces of corresponding scene position information by calculating with the plurality of target objects; and performing position verification based on the plurality of pieces of corresponding scene position information to obtain accurate scene position information.

Specifically, two or more target objects recognized in the depth image may be used to calculate the accurate coordinates of the user using the above-mentioned method, and then the plurality of the accurate coordinates may be checked against each other to obtain the final accurate coordinates.

Optionally, in the embodiments of the present disclosure, in the coordinate system of the target scene, it is determined whether the augmented reality device enters an effective interaction range of a virtual interactive object, and an interaction with the virtual interactive object is triggered when the augmented reality device enters the effective interaction range of the virtual object.

Specifically, the target scene may include a mobile virtual interactive object and a fixed virtual interactive object.

As an alternative embodiment, for the mobile virtual interactive object, the above-mentioned interactive method may further include the following steps.

At S211, current scene position information of the mobile virtual object in the coordinate system of the target scene is obtained to determine a current effective interaction range of the mobile virtual object.

At S212, when a current user interaction range of the augmented reality device overlaps the effective interaction range of the mobile virtual interactive object, it is determined that the augmented reality device enters the effective interaction range of the mobile virtual interactive object.

Specifically, referring to FIG. 4, the target scene may include virtual objects such as a non-player character (NPC), a shop, etc. Each virtual object can be pre-configured with a certain effective interaction range. For example, as illustrated in FIG. 4, the virtual object 411 has a relatively large effective interaction range, and the virtual object 412 has a relatively small effective interaction range. The size of the effective interaction range of each virtual object can be determined according to specific needs or according to characteristics of character. For the mobile virtual interactive object, its current coordinates can be determined first, and then coordinates corresponding to the effective interaction range at the current moment can be calculated based on its predetermined interaction range. In addition, for the augmented reality device 401, an effective interaction range may be configured in advance.

Optionally, in the embodiments of the present disclosure, the current user interaction range of the augmented reality device is obtained by calculating based on the current scene position information of the augmented reality device in the coordinate system of the target scene and a predetermined interaction range.

Specifically, for the augmented reality device, the current user interaction range can be calculated based on the current coordinates in the coordinate system of the target scene and the predetermined interaction range. When the current user interaction range of the augmented reality device overlaps the effective interaction range of the mobile virtual interactive object, it is determined that the augmented reality device enters the effective interaction range of the mobile virtual interactive object, and is able to interact with the mobile virtual interactive object, for example, talking, receiving task data, etc.

As an alternative embodiment, for the fixed virtual interactive object, the above-mentioned interaction method may include: obtaining the current scene position information of the augmented reality device in the coordinate system of the target scene, and determining that the augmented reality device enters the effective interaction range of the fixed mobile virtual interactive object when the current position is located in the effective interaction range of the fixed virtual interactive object.

Specifically, for the fixed virtual interactive object, its effective interaction range is a fixed coordinate range. When the current coordinates of the augmented reality device are within the fixed effective interaction range of the fixed virtual interactive object, the interaction with the fixed virtual interactive object is triggered. Alternatively, when the current user interaction range of the augmented reality device overlaps the effective interaction range of the fixed virtual interactive object, the interaction with the fixed virtual interactive object is triggered.

Therefore, in the interactive method based on the augmented reality device according to the embodiments of the present disclosure, the loadable augmented reality scenes near the user are determined in advance, when one or more scenes to be loaded reach a certain specific range, the one or more scenes can be pre-loaded, and the augmented reality game area scene can be triggered and loaded in time, thereby improving the user experience. In addition, after the augmented reality device enters the target scene, the position of the user in the coordinate system of the target scene can be accurately determined by recognizing the collected image of the current visual field of the user based on the motion recognition result. Thus, the user can interact with the virtual objects in the augmented reality scenes more accurately, thereby achieving the accurate positioning of the augmented reality scene and accurate positioning in the coordinate system of the augmented reality scene. In this way, the user experience can be effectively improved.

It should be understood that the terms "system" and "network" in the specification are often used interchangeably. The term "and/or" in the specification is merely intended to describe an association relation of the associated objects, i.e., three possible relations, for example, A and/or B may mean that only A exists, A and B exist, or only B exists. In addition, the character "/" in the specification generally indicates that the associated preceding and succeeding objects are in an "or" relation.

It should be understood that, in the various embodiments of the present disclosure, the sequence numbers of the foregoing processes do not mean the execution sequence. The execution sequence of the respective processes should be determined by their functions and internal logics, and should not constitute any limitation of the implementation process of the embodiments of the present disclosure.

The interactive method based on the augmented reality device according to the embodiments of the present disclosure is described in detail as above. An interactive system based on an augmented reality device according to the embodiments of the present disclosure will be described below with reference to the accompanying drawings. The technical features described in the method embodiments are applicable to the following system embodiments.

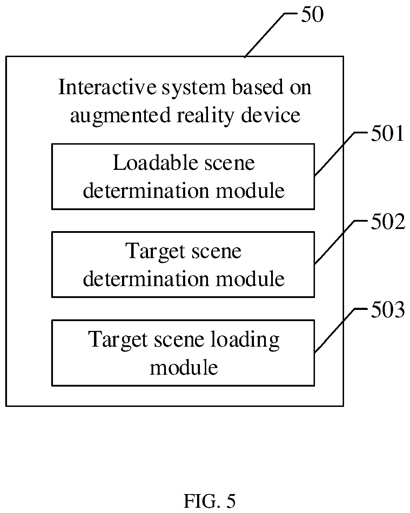

FIG. 5 illustrates a schematic block diagram of an interactive system 50 based on an augmented reality device according to an embodiment of the present disclosure. As illustrated in FIG. 5, the interactive system 50 includes: a loadable scene determination module 501 configured to obtain current position information of the augmented reality device and determine whether a loadable scene is included in a predetermined range of the current position; a target scene determination module 502 configured to obtain a distance between the current position and the loadable scene to determine whether the augmented reality device enters a loading range of a target scene when the loadable scene is included in the predetermined range of the current position; a target scene loading module 503 configured to load a model of the target scene to display the target scene in the augmented reality device when the augmented reality device enters the loading range of the target scene.

Therefore, the interactive system according to the embodiments of the present disclosure can enable the user to interact with the virtual objects in the augmented reality scene more accurately, so as to achieve an accurate positioning of the augmented reality scene and an accurate positioning in the coordinate system of the augmented reality scene, thereby effectively enhancing the user experience.

Optionally, in the embodiments of the present disclosure, the interactive system 50 further includes: a component activation module configured to generate a trigger instruction for activating a camera component and a sensor component of the augmented reality device; a data collection module configured to obtain image data corresponding to a current visual field of the augmented reality device using the camera component, and obtain motion data of the augmented reality device using the sensor component; and a position information calculation module configured to obtain position information of the augmented reality device in a coordinate system of the target scene based on the image data and the motion data.

Optionally, in the embodiments of the present disclosure, the position information calculation module includes: an image processing unit configured to recognize the depth image to obtain depth data of a target object, and obtain a distance between the augmented reality device and the target object based on the depth data; a sensor data processing unit configured to read sensor data of the augmented reality device, and obtain a motion recognition result of the augmented reality device based on the sensor data; and a result calculation unit configured to determine scene position information of the augmented reality device in the coordinate system of the target scene based on the motion recognition result and the distance between the augmented reality device and the target object.

Optionally, in the embodiments of the present disclosure, the interactive system 50 further includes a virtual interactive object recognition module. The virtual interactive object recognition module is configured to determine whether the augmented reality device enters an effective interactive range of a virtual interactive object in the coordinate system of the target scene, and trigger an interaction with the virtual interactive object when the augmented reality device enters the effective interactive range of the virtual object.

Optionally, in the embodiments of the present disclosure, the virtual interactive object is a mobile virtual interactive object; and the virtual interactive object recognition module includes: a mobile object interaction range calculation unit configured to obtain current scene position information of the mobile virtual object in the coordinate system of the target scene to determine a current effective interaction range of the mobile virtual object when the virtual interactive object is the mobile virtual interactive object; and a first interaction determination unit configured to determine that the augmented reality device enters the effective interaction range of the mobile virtual interactive object when a current user interaction range of the augmented reality device overlaps the effective interaction range of the mobile virtual interactive object.

Optionally, in the embodiments of the present disclosure, the virtual interactive object is a fixed virtual interactive object; and the virtual interactive object recognition module includes a second interaction determination unit. The second interaction determination unit is configured to obtain the current scene position information of the augmented reality device in the coordinate system of the target scene when the virtual interactive object is the fixed virtual interactive object, and determine that the augmented reality device enters the effective interaction range of the fixed mobile virtual interactive object when the current position is located in the effective interaction range of the fixed virtual interactive object.

Optionally, in the embodiments of the present disclosure, the current user interaction range of the augmented reality device is obtained by calculating based on the current scene position information of the augmented reality device in the coordinate system of the target scene and the predetermined interaction range.

Optionally, in the embodiments of the present disclosure, a plurality of target objects is provided; and the interactive system 50 further includes a position information verification module. The position information verification module is configured to obtain a plurality of pieces of corresponding scene position information by calculating with the plurality of target objects, and perform position verification based on the plurality of pieces of corresponding scene position information to obtain accurate scene position information.

Optionally, in the embodiments of the present disclosure, the interactive system further includes a task list obtaining module. The task list obtaining module is configured to read a task list corresponding to the target scene to display the task list in the augmented reality device, at time of loading the model of the target scene to display the target scene in the augmented reality device.

It should be understood that the above-mentioned and other operations and/or functions of respective units in the interactive system 50 according to the embodiments of the present disclosure are used to implement the corresponding processes in the method illustrated in FIG. 1, which are not repeated herein for brevity.

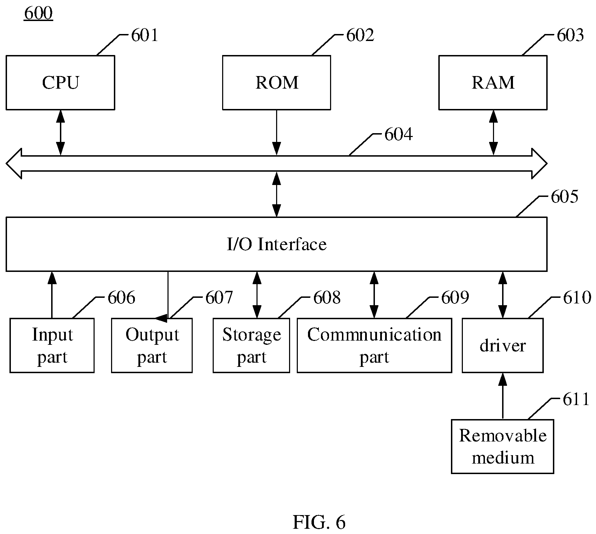

FIG. 6 illustrates a computer system 600 of an electronic device according to an embodiment of the present disclosure. The electronic device may be an augmented reality device such as AR glasses, or AR helmet.

The computer system 600 includes a Central Processing Unit (CPU) 601, which can execute various appropriate actions and processing according to programs stored in a Read-Only Memory (ROM) 602 or programs loaded into a Random Access Memory (RAM) 603 from a storage part 608. Various programs and data necessary for system operation are stored in the RAM 603. The CPU 601, the ROM 602, and the RAM 603 are connected to each other through a bus 604. An Input/Output (I/O) interface 605 is connected to the bus 604.

The following parts are connected to the I/O interface 605: an input part 606 including a keyboard, a mouse, etc.; an output part 607 including, for example, a Cathode Ray Tube (CRT), a Liquid Crystal Display (LCD), etc., and a speaker, etc.; a storage part 608 including a hard disk, etc.; and a communication part 609 including a network interface card such as a Local Area Network (LAN) card, a modem, and the like. The communication part 609 performs communication processing via a network such as the Internet. A driver 610 may be connected to the I/O interface 605 as needed. A removable medium 611, for example, a magnetic disk, an optical disk, a magneto-optical disk, a semiconductor memory, etc., is installed on the drive 610 as required, so that the computer program read therefrom can be installed into the storage part 608 as required.

In particular, according to an embodiment of the present disclosure, the process described below with reference to a flowchart can be implemented as a computer software program. For example, an embodiment of the present disclosure includes a computer program product, which includes a computer program carried on a computer-readable medium, and the computer program contains program code for executing the method illustrated in the flowchart. In such an embodiment, the computer program may be downloaded and installed from the network through the communication part 609, and/or installed from the removable medium 611. When the computer program is executed by the CPU 601, various functions defined in the system of the present disclosure are executed.

Therefore, the computer system 600 of the embodiment of the present disclosure can achieve an accurate positioning of the target scene and display the target scene timely, and it can effectively enhance user's sense of immersion and improve the user experience.

It should be noted that the computer-readable medium illustrated in the embodiments of the present disclosure has a computer program stored thereon, and the computer program, when being executed by a processor, can implement the interactive method based on an augmented reality device according to the present disclosure.

Specifically, the computer-readable medium illustrated in the embodiments of the present disclosure may be a computer-readable signal medium or a computer-readable storage medium, or a combination thereof. For example, the computer-readable storage medium may be, but not limited to, an electrical, magnetic, optical, electromagnetic, infrared, or semiconductor system, apparatus, or device, or any combinations thereof. More specific examples of the computer-readable storage medium may include, but are not limited to, an electrical connection with one or more wires, a portable computer disk, a hard disk, a RAM, a ROM, an Erasable Programmable Read-Only Memory (EPROM), a flash memory, an optical fiber, a portable Compact Disc Read-Only Memory (CD-ROM), an optical storage device, a magnetic storage device, or any suitable combinations thereof. In the present disclosure, the computer-readable storage medium may be any tangible medium that contains or stores a program, and the program may be used by or used based on an instruction execution system, apparatus, or device. In the present disclosure, the computer-readable signal medium may include a data signal propagated in a baseband or as a part of a carrier wave, and a computer-readable program code is carried therein. This propagated data signal can be in various forms, including but not limited to an electromagnetic signal, an optical signal, or any suitable combinations thereof. The computer-readable signal medium may be any computer-readable medium other than a computer-readable storage medium. The computer-readable medium may send, propagate, or transmit the program, which is used by or used in combination with the instruction execution system, apparatus, or device. The program code contained in the computer-readable medium can be transmitted through any suitable medium, including but not limited to, wireless transmission, wire transmission, etc., or any suitable combination thereof.

Those skilled in the art shall be aware that the units and algorithm steps of the examples described in combination with the embodiments in the specification can be implemented by an electronic hardware or a combination of a computer software and an electronic hardware. Whether these functions are executed by hardware or software depends on a specific application and a design constraint condition of the technical solution. Professional technicians may use different methods for each specific application to implement the described functions, and such implementation should not be considered as going beyond the scope of the present disclosure.

Those skilled in the art can clearly understand that, for the convenience and conciseness of the description, the specific working process of the above-described system, apparatus, and unit can refer to the corresponding process in the foregoing method embodiments, which is not repeated herein.

In the several embodiments provided in the present disclosure, it should be understood that the disclosed system, apparatus, and method can be implemented in other ways. For example, the apparatus embodiments described above are only illustrative. For example, the division of the unit is only a logical function division. In an actual implementation, there may be other division manners. For example, multiple units or components may be combined or may be integrated into another system, or some features can be omitted or not performed. In addition, the illustrated or discussed mutual coupling or direct coupling or communication connection may be indirect coupling or communication connection through interfaces, apparatuses or units, and may be in electrical, mechanical or other forms.

The unit described as a separate part may or may not be physically separated, and the part displayed as a unit may or may not be a physical unit, that is, it may be located in one place, or may be distributed on a plurality of network units. Some or all of the units may be selected based on actual needs to achieve the purposes of the solutions of the embodiments.

In addition, the functional units in the respective embodiments of the present disclosure may be integrated into one processing unit, or each unit may exist alone physically, or two or more units may be integrated into one unit.

When the function is implemented in the form of a software functional unit and sold or used as an independent product, it can be stored in the computer-readable storage medium. In this regard, the technical solutions of the present disclosure essentially, the part that contributes to the existing technology, or the part of the technical solutions can be embodied in the form of a software product, and the computer software product is stored in a storage medium and includes several instructions to cause a computer device (for example, a personal computer, a server, or a network device, etc.) to execute all or part of the steps of the respective embodiments of the present disclosure. The aforementioned storage medium includes a U disk, a mobile hard disk, a ROM, a RAM, a magnetic disk, an optical disk, or other medium that can store the program code.

The above are only specific implementations of the present disclosure, and the protection scope of the present disclosure is not limited thereto. Within the technical scope of the present disclosure, those skilled in the art can easily make variations, which shall fall within the protection scope of the present disclosure. The protection scope of the present disclosure should be defined by the appended claims.

## Claims

1. An interactive method based on an augmented reality device, the interactive method comprising:
(S11) obtaining current position information of the augmented reality device, and determining whether a loadable scene is comprised in a predetermined range of the current position, wherein the loadable scene is pre-configured with a corresponding coordinate range based on a display range of the loadable scene;
(S12) obtaining, when the loadable scene is comprised in the predetermined range of the current position, a distance between the current position and the loadable scene based on coordinate data to determine whether the augmented reality device enters a loading range of loadable scene, and determining, in response to determining that the augmented reality device enters the loading range of loadable scene, the loadable scene as a target scene; and
(S13) loading a model of the target scene to display the target scene in the augmented reality device, when the augmented reality device enters the loading range of the target scene,
wherein the interactive method further comprises, when the augmented reality device enters the loading range of the target scene:
generating a trigger instruction for activating a camera component and a sensor component of the augmented reality device;
obtaining image data corresponding to a current visual field of the augmented reality device using the camera component, and obtaining motion data of the augmented reality device using the sensor component; and
obtaining position information of the augmented reality device in a coordinate system of the target scene based on the image data and the motion data,
wherein the image data comprises a depth image,
**characterized in that**, said obtaining the position information of the augmented reality device in the coordinate system of the target scene based on the image data and the motion data comprises:
performing a recognition on the depth image to obtain depth data of a target object, and obtaining a distance between the augmented reality device and the target object based on the depth data;
reading sensor data of the augmented reality device, and obtaining a motion recognition result of the augmented reality device based on the sensor data; and
determining scene position information of the augmented reality device in the coordinate system of the target scene based on the motion recognition result and the distance between the augmented reality device and the target object.

2. The interactive method according to claim 1, further comprising:
determining, in the coordinate system of the target scene, whether the augmented reality device enters an effective interaction range of a virtual interactive object, and triggering an interaction with the virtual interactive object when the augmented reality device enters the effective interaction range of the virtual interactive object.

3. The interactive method according to claim 2, wherein the virtual interactive object is a mobile virtual interactive object; and
wherein said determining whether the augmented reality device enters the effective interaction range of the virtual interactive object comprises:
obtaining current scene position information of the mobile virtual interactive object in the coordinate system of the target scene to determine a current effective interaction range of the mobile virtual interactive object; and
determining that the augmented reality device enters the effective interaction range of the mobile virtual interactive object, when a current user interaction range of the augmented reality device overlaps the effective interaction range of the mobile virtual interactive object,
optionally, the current user interaction range of the augmented reality device is obtained by calculating based on the current scene position information of the augmented reality device in the coordinate system of the target scene and a predetermined interaction range.

4. The interactive method according to claim 2, wherein the virtual interactive object is a fixed virtual interactive object; and
wherein said determining whether the augmented reality device enters the effective interaction range of the virtual interactive object comprises:
obtaining current scene position information of the augmented reality device in the coordinate system of the target scene, and determining that the augmented reality device enters the effective interaction range of the fixed virtual interactive object when the current scene position information is located in the effective interaction range of the fixed virtual interactive object.

5. The interactive method according to claim 1, wherein a plurality of target objects is provided; and the method further comprises:
obtaining a plurality of pieces of corresponding scene position information by calculating with the plurality of target objects; and
performing position verification based on the plurality of pieces of scene position information to obtain accurate scene position information.

6. The interactive method according to claim 1, further comprising, at time of loading the model of the target scene to display the target scene in the augmented reality device:
reading a task list corresponding to the target scene to display the task list in the augmented reality device.

7. An interactive system (50) based on an augmented reality device, the interactive system comprising:
a loadable scene determination module (501) configured to obtain current position information of the augmented reality device and determine whether a loadable scene is comprised in a predetermined range of the current position, wherein the loadable scene is pre-configured with a corresponding coordinate range based on a display range of the loadable scene;
a target scene determination module (502) configured to: obtain, when the loadable scene is comprised in the predetermined range of the current position, a distance between the current position and the loadable scene based on coordinate data to determine whether the augmented reality device enters a loading range of loadable scene, and determine, in response to determining that the augmented reality device enters the loading range of loadable scene, the loadable scene as a target scene; and
a target scene loading module (503) configured to load a model of the target scene to display the target scene in the augmented reality device, when the augmented reality device enters the loading range of the target scene,
wherein the interactive system (50) further comprises:
a component activation module configured to generate a trigger instruction for activating a camera component and a sensor component of the augmented reality device;
a data collection module configured to obtain image data corresponding to a current visual field of the augmented reality device using the camera component, and obtain motion data of the augmented reality device using the sensor component; and
a position information calculation module configured to obtain position information of the augmented reality device in a coordinate system of the target scene based on the image data and the motion data,
wherein the image data comprises a depth image;
**characterized in that**, the position information calculation module comprises:
an image processing unit configured to perform a recognition on the depth image to obtain depth data of a target object, and obtain a distance between the augmented reality device and the target object based on the depth data;
a sensor data processing unit configured to read sensor data of the augmented reality device, and obtain a motion recognition result of the augmented reality device based on the sensor data; and
a result calculation unit configured to determine scene position information of the augmented reality device in the coordinate system of the target scene based on the motion recognition result and the distance between the augmented reality device and the target object.

8. The interactive system (50) according to claim 7, further comprising:
a virtual interactive object recognition module configured to, in the coordinate system of the target scene, determine whether the augmented reality device enters an effective interaction range of a virtual interactive object, and trigger an interaction with the virtual interactive object when the augmented reality device enters the effective interaction range of the virtual interactive object.

9. The interactive system (50) according to claim 8, wherein the virtual interactive object is a mobile virtual interactive object; and the virtual interactive object recognition module comprises:
a mobile object interaction range calculation unit configured to obtain current scene position information of the mobile virtual interactive object in the coordinate system of the target scene to determine a current effective interaction range of the mobile virtual interactive object when the virtual interactive object is the mobile virtual interactive object; and
a first interaction determination unit configured to determine that the augmented reality device enters the effective interaction range of the mobile virtual interactive object when a current user interaction range of the augmented reality device overlaps the effective interaction range of the mobile virtual interactive object,
optionally, the current user interaction range of the augmented reality device is obtained by calculating based on the current scene position information of the augmented reality device in the coordinate system of the target scene and a predetermined interaction range.

10. The interactive system (50) according to claim 8, wherein the virtual interactive object is a fixed virtual interactive object; and the virtual interactive object recognition module comprises:
a second interaction determination unit configured to: obtain current scene position information of the augmented reality device in the coordinate system of the target scene when the virtual interactive object is the fixed virtual interactive object, and determine that the augmented reality device enters the effective interaction range of the fixed virtual interactive object when the current position is located in the effective interaction range of the fixed virtual interactive object.

11. The interactive system (50) according to claim 7, comprising:
one or more processors; and
a storage apparatus configured to store one or more programs,
wherein the one or more programs, when executed by the one or more processors, implement the performance of the interactive system (50).

## Patentansprüche

1. Interaktives Verfahren basierend auf einer Vorrichtung der erweiterten Realität, das interaktive Verfahren umfassend:
(S11) Erlangen von Informationen über die gegenwärtige Position der Vorrichtung der erweiterten Realität und Bestimmen, ob eine ladbare Szene in einem im Voraus bestimmten Bereich der gegenwärtigen Position enthalten ist, wobei die ladbare Szene mit einem korrespondierenden Koordinatenbereich basierend auf einem Anzeigebereich der ladbaren Szene vorkonfiguriert ist;
(S12) Erlangen, wenn die ladbare Szene in dem im Voraus bestimmten Bereich der gegenwärtigen Position enthalten ist, einer Distanz zwischen der gegenwärtigen Position und der ladbaren Szene basierend auf Koordinatendaten, um zu bestimmen, ob die Vorrichtung der erweiterten Realität in einen Ladebereich einer ladbaren Szene eintritt, und Bestimmen, als Reaktion auf Bestimmen, dass die Vorrichtung der erweiterten Realität in den Ladebereich der ladbaren Szene eintritt, der ladbaren Szene als eine Zielszene; und
(S13) Laden eines Modells der Zielszene, um die Zielszene in der Vorrichtung der erweiterten Realität anzuzeigen, wenn die Vorrichtung der erweiterten Realität in den Ladebereich der Zielszene eintritt,
wobei das interaktive Verfahren ferner umfasst, wenn die Vorrichtung der erweiterten Realität in den Ladebereich der Zielszene eintritt:
Erzeugen einer Auslöseranweisung zum Aktivieren einer Kamerakomponente und einer Sensorkomponente der Vorrichtung der erweiterten Realität;
Erlangen von Bilddaten korrespondierend mit einem gegenwärtigen Sichtfeld der Vorrichtung der erweiterten Realität unter Verwendung der Kamerakomponente und Erlangen von Bewegungsdaten der Vorrichtung der erweiterten Realität unter Verwendung der Sensorkomponente; und
Erlangen von Positionsinformationen der Vorrichtung der erweiterten Realität in einem Koordinatensystem der Zielszene basierend auf den Bilddaten und den Bewegungsdaten,
wobei die Bilddaten ein Tiefenbild umfassen,
**dadurch gekennzeichnet, dass** das Erlangen der Positionsinformationen der Vorrichtung der erweiterten Realität in dem Koordinatensystem der Zielszene basierend auf den Bilddaten und den Bewegungsdaten umfasst:
Durchführen einer Erkennung an dem Tiefenbild, um Tiefendaten eines Zielobjekts zu erlangen, und Erlangen einer Distanz zwischen der Vorrichtung der erweiterten Realität und dem Zielobjekt basierend auf den Tiefendaten;
Lesen von Sensordaten der Vorrichtung der erweiterten Realität und Erlangen eines Bewegungserkennungsergebnisses der Vorrichtung der erweiterten Realität basierend auf den Sensordaten; und
Bestimmen von Szenenpositionsinformationen der Vorrichtung der erweiterten Realität in dem Koordinatensystem der Zielszene basierend auf dem Bewegungserkennungsergebnis und der Distanz zwischen der Vorrichtung der erweiterten Realität und dem Zielobjekt.

2. Interaktives Verfahren nach Anspruch 1, ferner umfassend:
Bestimmen, in dem Koordinatensystem der Zielszene, ob die Vorrichtung der erweiterten Realität in einen effektiven Interaktionsbereich eines virtuellen interaktiven Objekts eintritt, und Auslösen einer Interaktion mit dem virtuellen interaktiven Objekt, wenn die Vorrichtung der erweiterten Realität in den effektiven Interaktionsbereich des virtuellen interaktiven Objekts eintritt.

3. Interaktives Verfahren nach Anspruch 2, wobei das virtuelle interaktive Objekt ein mobiles virtuelles interaktives Objekt ist; und
wobei das Bestimmen, ob die Vorrichtung der erweiterten Realität in den effektiven Interaktionsbereich des virtuellen interaktiven Objekts eintritt, umfasst:
Erlangen von gegenwärtigen Szenenpositionsinformationen des mobilen virtuellen interaktiven Objekts in dem Koordinatensystem der Zielszene, um einen gegenwärtigen effektiven Interaktionsbereich des mobilen virtuellen interaktiven Objekts zu bestimmen; und
Bestimmen, dass die Vorrichtung der erweiterten Realität in den effektiven Interaktionsbereich des mobilen virtuellen interaktiven Objekts eintritt, wenn ein gegenwärtiger Benutzerinteraktionsbereich der Vorrichtung der erweiterten Realität den effektiven Interaktionsbereich des mobilen virtuellen interaktiven Objekts überlappt,
wahlweise wird der gegenwärtige Benutzerinteraktionsbereich der Vorrichtung der erweiterten Realität durch Berechnen basierend auf den gegenwärtigen Szenenpositionsinformationen der Vorrichtung der erweiterten Realität in dem Koordinatensystem der Zielszene und einem im Voraus bestimmten Interaktionsbereich erlangt.

4. Interaktives Verfahren nach Anspruch 2, wobei das virtuelle interaktive Objekt ein festes virtuelles interaktives Objekt ist; und
wobei das Bestimmen, ob die Vorrichtung der erweiterten Realität in den effektiven Interaktionsbereich des virtuellen interaktiven Objekts eintritt, umfasst:
Erlangen von gegenwärtigen Szenenpositionsinformationen der Vorrichtung der erweiterten Realität in dem Koordinatensystem der Zielszene und Bestimmen, dass die Vorrichtung der erweiterten Realität in den effektiven Interaktionsbereich des festen virtuellen interaktiven Objekts eintritt, wenn die gegenwärtigen Szenenpositionsinformationen in dem effektiven Interaktionsbereich des festen virtuellen interaktiven Objekts angeordnet sind.

5. Interaktives Verfahren nach Anspruch 1, wobei eine Vielzahl von Zielobjekten bereitgestellt wird; und das Verfahren ferner umfasst:
Erlangen einer Vielzahl von Teilen von korrespondierenden Szenenpositionsinformationen durch Berechnen mit der Vielzahl von Zielobjekten; und
Durchführen von Positionsverifizierung basierend auf der Vielzahl von Teilen von Szenenpositionsinformationen, um genaue Szenenpositionsinformationen zu erlangen.

6. Interaktives Verfahren nach Anspruch 1, ferner umfassend, zur Zeit des Ladens des Modells der Zielszene, um die Zielszene in der Vorrichtung der erweiterten Realität anzuzeigen:
Lesen einer Aufgabenliste korrespondierend mit der Zielszene, um die Aufgabenliste in der Vorrichtung der erweiterten Realität anzuzeigen.

7. Interaktives System (50) basierend auf einer Vorrichtung der erweiterten Realität, das interaktive System umfassend:
ein Modul zum Bestimmen einer ladbaren Szene (501), konfiguriert zum Erlangen von Informationen über die gegenwärtige Position der Vorrichtung der erweiterten Realität und Bestimmen, ob eine ladbare Szene in einem im Voraus bestimmten Bereich der gegenwärtigen Position enthalten ist, wobei die ladbare Szene mit einem korrespondierenden Koordinatenbereich basierend auf einem Anzeigebereich der ladbaren Szene vorkonfiguriert ist;
ein Zielszenen-Bestimmungsmodul (502), konfiguriert zum: Erlangen, wenn die ladbare Szene in dem im Voraus bestimmten Bereich der gegenwärtigen Position enthalten ist, einer Distanz zwischen der gegenwärtigen Position und der ladbaren Szene basierend auf Koordinatendaten, um zu bestimmen, ob die Vorrichtung der erweiterten Realität in einen Ladebereich einer ladbaren Szene eintritt, und Bestimmen, als Reaktion auf Bestimmen, dass die Vorrichtung der erweiterten Realität in den Ladebereich der ladbaren Szene eintritt, der ladbaren Szene als eine Zielszene; und
ein Zielszenen-Lademodul (503), konfiguriert zum Laden eines Modells der Zielszene, um die Zielszene in der Vorrichtung der erweiterten Realität anzuzeigen, wenn die Vorrichtung der erweiterten Realität in den Ladebereich der Zielszene eintritt,
wobei das interaktive System (50) ferner umfasst:
ein Komponenten-Aktivierungsmodul, konfiguriert zum Erzeugen einer Auslöseranweisung zum Aktivieren einer Kamerakomponente und einer Sensorkomponente der Vorrichtung der erweiterten Realität;
ein Datenerfassungsmodul, konfiguriert zum Erlangen von Bilddaten korrespondierend mit einem gegenwärtigen Sichtfeld der Vorrichtung der erweiterten Realität unter Verwendung der Kamerakomponente und zum Erlangen von Bewegungsdaten der Vorrichtung der erweiterten Realität unter Verwendung der Sensorkomponente; und
ein Positionsinformationen-Berechnungsmodul, konfiguriert zum Erlangen von Positionsinformationen der Vorrichtung der erweiterten Realität in einem Koordinatensystem der Zielszene basierend auf den Bilddaten und den Bewegungsdaten,
wobei die Bilddaten ein Tiefenbild umfassen;
**dadurch gekennzeichnet, dass** das Positionsinformationen-Berechnungsmodul umfasst:
eine Bildverarbeitungseinheit, konfiguriert zum Durchführen einer Erkennung an dem Tiefenbild, um Tiefendaten eines Zielobjekts zu erlangen, und zum Erlangen einer Distanz zwischen der Vorrichtung der erweiterten Realität und dem Zielobjekt basierend auf den Tiefendaten;
eine Sensordaten-Verarbeitungseinheit, konfiguriert zum Lesen von Sensordaten der Vorrichtung der erweiterten Realität und zum Erlangen eines Bewegungserkennungsergebnisses der Vorrichtung der erweiterten Realität basierend auf den Sensordaten; und
eine Ergebnisberechnungseinheit, konfiguriert zum Bestimmen von Szenenpositionsinformationen der Vorrichtung der erweiterten Realität in dem Koordinatensystem der Zielszene basierend auf dem Bewegungserkennungsergebnis und der Distanz zwischen der Vorrichtung der erweiterten Realität und dem Zielobjekt.

8. Interaktives System (50) nach Anspruch 7, ferner umfassend:
ein Modul zum Erkennen eines virtuellen interaktiven Objekts, konfiguriert zum, in dem Koordinatensystem der Zielszene, Bestimmen, ob die Vorrichtung der erweiterten Realität in einen effektiven Interaktionsbereich eines virtuellen interaktiven Objekts eintritt, und zum Auslösen einer Interaktion mit dem virtuellen interaktiven Objekt, wenn die Vorrichtung der erweiterten Realität in den effektiven Interaktionsbereich des virtuellen interaktiven Objekts eintritt.

9. Interaktives System (50) nach Anspruch 8, wobei das virtuelle interaktive Objekt ein mobiles virtuelles interaktives Objekt ist; und das Modul zum Erkennen eines virtuellen interaktiven Objekts umfasst:
eine Einheit zum Berechnen eines Interaktionsbereichs eines mobilen Objekts, konfiguriert zum Erlangen von gegenwärtigen Szenenpositionsinformationen des mobilen virtuellen interaktiven Objekts in dem Koordinatensystem der Zielszene, um einen gegenwärtigen effektiven Interaktionsbereich des mobilen virtuellen interaktiven Objekts zu bestimmen, wenn das virtuelle interaktive Objekt das mobile virtuelle interaktive Objekt ist; und
eine erste Interaktionsbestimmungseinheit, konfiguriert zum Bestimmen, dass die Vorrichtung der erweiterten Realität in den effektiven Interaktionsbereich des mobilen virtuellen interaktiven Objekts eintritt, wenn ein gegenwärtiger Benutzerinteraktionsbereich der Vorrichtung der erweiterten Realität den effektiven Interaktionsbereich des mobilen virtuellen interaktiven Objekts überlappt,
wahlweise wird der gegenwärtige Benutzerinteraktionsbereich der Vorrichtung der erweiterten Realität durch Berechnen basierend auf den gegenwärtigen Szenenpositionsinformationen der Vorrichtung der erweiterten Realität in dem Koordinatensystem der Zielszene und einem im Voraus bestimmten Interaktionsbereich erlangt.

10. Interaktives System (50) nach Anspruch 8, wobei das virtuelle interaktive Objekt ein festes virtuelles interaktives Objekt ist; und das Modul zum Erkennen eines virtuellen interaktiven Objekts umfasst:
eine zweite Interaktionsbestimmungseinheit, konfiguriert zum: Erlangen von gegenwärtigen Szenenpositionsinformationen der Vorrichtung der erweiterten Realität in dem Koordinatensystem der Zielszene, wenn das virtuelle interaktive Objekt das feste virtuelle interaktive Objekt ist, und Bestimmen, dass die Vorrichtung der erweiterten Realität in den effektiven Interaktionsbereich des festen virtuellen interaktiven Objekts eintritt, wenn die gegenwärtige Position in dem effektiven Interaktionsbereich des festen virtuellen interaktiven Objekts angeordnet ist.

11. Interaktives System (50) nach Anspruch 7, umfassend:
einen oder mehrere Prozessoren; und
ein Speichergerät, konfiguriert zum Speichern eines oder mehrerer Programme,
wobei das eine oder die mehreren Programme, wenn sie in dem einen oder den mehreren Prozessoren ausgeführt werden, die Durchführung des interaktiven Systems (50) implementieren.

## Revendications

1. Procédé interactif basé sur un dispositif de réalité augmentée, le procédé interactif comprenant :
(S11) l'obtention d'informations de position actuelle du dispositif de réalité augmentée et la détermination qu'une scène chargeable est comprise ou non dans une plage prédéterminée de la position actuelle, dans lequel la scène chargeable est préconfigurée avec une plage de coordonnées correspondante basée sur une plage d'affichage de la scène chargeable ;
(S12) l'obtention, lorsque la scène chargeable est comprise dans la plage prédéterminée de la position actuelle, d'une distance entre la position actuelle et la scène chargeable sur la base de données de coordonnées pour déterminer que le dispositif de réalité augmentée entre ou non dans une plage de chargement de scène chargeable, et la détermination, en réponse à la détermination que le dispositif de réalité augmentée entre dans la plage de chargement de scène chargeable, de la scène chargeable en tant que scène cible ; et
(S13) le chargement d'un modèle de la scène cible pour afficher la scène cible dans le dispositif de réalité augmentée, lorsque le dispositif de réalité augmentée entre dans la plage de chargement de la scène cible,
le procédé interactif comprenant en outre, lorsque le dispositif de réalité augmentée entre dans la plage de chargement de la scène cible :
la génération d'une instruction de déclenchement pour activer un composant de caméra et un composant de capteur du dispositif de réalité augmentée ;
l'obtention de données d'image correspondant à un champ visuel actuel du dispositif de réalité augmentée à l'aide du composant de caméra, et l'obtention de données de mouvement du dispositif de réalité augmentée à l'aide du composant de capteur ; et
l'obtention d'informations de position du dispositif de réalité augmentée dans un système de coordonnées de la scène cible sur la base des données d'image et des données de mouvement,
dans lequel les données d'image comprennent une image de profondeur,
**caractérisé en ce que** ladite obtention des informations de position du dispositif de réalité augmentée dans le système de coordonnées de la scène cible sur la base des données d'image et des données de mouvement comprend :
la réalisation d'une reconnaissance sur l'image de profondeur pour obtenir des données de profondeur d'un objet cible, et l'obtention d'une distance entre le dispositif de réalité augmentée et l'objet cible sur la base des données de profondeur ;
la lecture de données de capteur du dispositif de réalité augmentée et l'obtention d'un résultat de reconnaissance de mouvement du dispositif de réalité augmentée sur la base des données de capteur ; et
la détermination d'informations de position de scène du dispositif de réalité augmentée dans le système de coordonnées de la scène cible sur la base du résultat de reconnaissance de mouvement et de la distance entre le dispositif de réalité augmentée et l'objet cible.

2. Procédé interactif selon la revendication 1, comprenant en outre :
la détermination, dans le système de coordonnées de la scène cible, que le dispositif de réalité augmentée entre ou non dans une plage d'interaction effective d'un objet interactif virtuel, et le déclenchement d'une interaction avec l'objet interactif virtuel lorsque le dispositif de réalité augmentée entre dans la plage d'interaction effective de l'objet interactif virtuel.

3. Procédé interactif selon la revendication 2, dans lequel l'objet interactif virtuel est un objet interactif virtuel mobile ; et
dans lequel ladite détermination que le dispositif de réalité augmentée entre ou non dans la plage d'interaction effective de l'objet interactif virtuel comprend :
l'obtention d'informations de position de scène actuelle de l'objet interactif virtuel mobile dans le système de coordonnées de la scène cible afin de déterminer une plage d'interaction effective actuelle de l'objet interactif virtuel mobile ; et
la détermination que le dispositif de réalité augmentée entre dans la plage d'interaction effective de l'objet interactif virtuel mobile, lorsqu'une plage d'interaction utilisateur actuelle du dispositif de réalité augmentée chevauche la plage d'interaction effective de l'objet interactif virtuel mobile,
éventuellement, la plage d'interaction d'utilisateur actuelle du dispositif de réalité augmentée est obtenue par un calcul basé sur les informations de position de scène actuelle du dispositif de réalité augmentée dans le système de coordonnées de la scène cible et une plage d'interaction prédéterminée.

4. Procédé interactif selon la revendication 2, dans lequel l'objet interactif virtuel est un objet interactif virtuel fixe ; et
dans lequel ladite détermination que le dispositif de réalité augmentée entre dans la plage d'interaction effective de l'objet interactif virtuel comprend :
l'obtention d'informations de position de scène actuelle du dispositif de réalité augmentée dans le système de coordonnées de la scène cible, et la détermination que le dispositif de réalité augmentée entre dans la plage d'interaction effective de l'objet interactif virtuel fixe lorsque les informations de position de scène actuelles se trouvent dans la plage d'interaction effective de l'objet interactif virtuel fixe.

5. Procédé interactif selon la revendication 1, dans lequel une pluralité d'objets cibles est fournie ; et le procédé comprend en outre :
l'obtention d'une pluralité d'éléments d'informations de position de scène correspondants par calcul avec la pluralité d'objets cibles ; et
la réalisation d'une vérification de position basée sur la pluralité d'informations de position de scène pour obtenir des informations de position de scène précises.

6. Procédé interactif selon la revendication 1, comprenant en outre, au moment du chargement du modèle de la scène cible pour afficher la scène cible dans le dispositif de réalité augmentée :
la lecture d'une liste de tâches correspondant à la scène cible pour afficher la liste de tâches dans le dispositif de réalité augmentée.

7. Système interactif (50) basé sur un dispositif de réalité augmentée, le système interactif comprenant :
un module de détermination de scène chargeable (501) configuré pour obtenir des informations de position actuelle du dispositif de réalité augmentée et déterminer qu'une scène chargeable est comprise ou non dans une plage prédéterminée de la position actuelle, dans lequel la scène chargeable est préconfigurée avec une plage de coordonnées correspondante basée sur une plage d'affichage de la scène chargeable ;
un module de détermination de scène cible (502) configuré pour : obtenir, lorsque la scène chargeable est comprise dans la plage prédéterminée de la position actuelle, une distance entre la position actuelle et la scène chargeable sur la base de données de coordonnées pour déterminer que le dispositif de réalité augmentée entre ou non dans une plage de charge de scène chargeable, et déterminer, en réponse à la détermination que le dispositif de réalité augmentée entre dans la plage de chargement de scène chargeable, la scène chargeable en tant que scène cible ; et
un module de chargement de scène cible (503) configuré pour charger un modèle de la scène cible afin d'afficher la scène cible dans le dispositif de réalité augmentée, lorsque le dispositif de réalité augmentée entre dans la plage de chargement de la scène cible,
le système interactif (50) comprenant en outre :
un module d'activation de composant configuré pour générer une instruction de déclenchement pour activer un composant de caméra et un composant de capteur du dispositif de réalité augmentée ;
un module de collecte de données configuré pour obtenir des données d'image correspondant à un champ visuel actuel du dispositif de réalité augmentée à l'aide du composant de caméra, et obtenir des données de mouvement du dispositif de réalité augmentée à l'aide du composant de capteur ; et
un module de calcul d'informations de position configuré pour obtenir des informations de position du dispositif de réalité augmentée dans un système de coordonnées de la scène cible sur la base des données d'image et des données de mouvement,
dans lequel les données d'image comprennent une image de profondeur ;
**caractérisé en ce que** le module de calcul d'informations de position comprend :
une unité de traitement d'image configurée pour réaliser une reconnaissance sur l'image de profondeur afin d'obtenir des données de profondeur d'un objet cible, et obtenir une distance entre le dispositif de réalité augmentée et l'objet cible sur la base des données de profondeur ;
une unité de traitement de données de capteur configurée pour lire des données du capteur du dispositif de réalité augmentée et obtenir un résultat de reconnaissance de mouvement du dispositif de réalité augmentée sur la base des données de capteur ; et
une unité de calcul de résultats configurée pour déterminer des informations de position de scène du dispositif de réalité augmentée dans le système de coordonnées de la scène cible sur la base du résultat de reconnaissance de mouvement et de la distance entre le dispositif de réalité augmentée et l'objet cible.

8. Système interactif (50) selon la revendication 7, comprenant en outre :
un module de reconnaissance d'objet interactif virtuel configuré pour, dans le système de coordonnées de la scène cible, déterminer que le dispositif de réalité augmentée entre dans la plage d'interaction effective d'un objet interactif virtuel, et déclencher une interaction avec l'objet interactif virtuel lorsque le dispositif de réalité augmentée entre dans la plage d'interaction effective de l'objet interactif virtuel.

9. Système interactif (50) selon la revendication 8, dans lequel l'objet interactif virtuel est un objet interactif virtuel mobile ; et le module de reconnaissance d'objet interactif virtuel comprend :
une unité de calcul de plage d'interaction d'objet mobile configurée pour obtenir des informations de position de scène actuelle de l'objet interactif virtuel mobile dans le système de coordonnées de la scène cible afin de déterminer une plage d'interaction effective actuelle de l'objet interactif virtuel mobile lorsque l'objet interactif virtuel est l'objet interactif virtuel mobile ; et
une première unité de détermination d'interaction configurée pour déterminer que le dispositif de réalité augmentée entre dans la plage d'interaction effective de l'objet interactif virtuel mobile lorsqu'une plage d'interaction d'utilisateur actuelle du dispositif de réalité augmentée chevauche la plage d'interaction effective de l'objet interactif virtuel mobile,
éventuellement, la plage d'interaction d'utilisateur actuelle du dispositif de réalité augmentée est obtenue par un calcul basé sur les informations de position de scène actuelle du dispositif de réalité augmentée dans le système de coordonnées de la scène cible et une plage d'interaction prédéterminée.

10. Système interactif (50) selon la revendication 8, dans lequel l'objet interactif virtuel est un objet interactif virtuel fixe ; et le module de reconnaissance d'objet interactif virtuel comprend :
une seconde unité de détermination d'interaction configurée pour : obtenir des informations de position de scène actuelle du dispositif de réalité augmentée dans le système de coordonnées de la scène cible lorsque l'objet interactif virtuel est l'objet interactif virtuel fixe, et déterminer que le dispositif de réalité augmentée entre dans la plage d'interaction effective de l'objet interactif virtuel fixe lorsque la position actuelle est située dans la plage d'interaction effective de l'objet interactif virtuel fixe.

11. Système interactif (50) selon la revendication 7, comprenant :
un ou plusieurs processeurs ; et
un appareil de stockage configuré pour stocker un ou plusieurs programmes,
dans lequel les un ou plusieurs programmes, lorsqu'ils sont exécutés par les un ou plusieurs processeurs mettent en œuvre les performances du système interactif (50).
